# EUROPEAN PATENT SPECIFICATION

(11) **EP 3 451 614 B1**
(45) Date of publication and mention of the grant of the patent: **30.12.2020**
(21) Application number: 17892316.5
(22) Date of filing: 13.06.2017
(51) Int. Cl.: H04L 29/06, H04L 29/08

(54) **DISPATCHING METHOD AND DEVICE IN CONTENT DELIVERY NETWORK**
SENDEVERFAHREN UND -VORRICHTUNG IN EINEM INHALTSBEREITSTELLUNGSNETZ
PROCÉDÉ ET DISPOSITIF DE DISTRIBUTION DANS UN RÉSEAU DE DISTRIBUTION DE CONTENU

(30) Priority: 22.01.2017 CN 201710053963
(43) Date of publication of application: 06.03.2019
(73) Proprietor: Huawei Technologies Co., Ltd., Longgang District Shenzhen, Guangdong 518129 (CN)
(72) Inventor: YAN, Wei, Shenzhen Guangdong 518129 (CN)
(74) Representative: Gill Jennings & Every LLP
(86) International application number: PCT/CN2017/088148
(87) International publication number: WO 2018/133306

(56) References cited:
- EP-A1- 3 017 585
- WO-A1-2016/082289
- WO-A2-01/89172
- CN-A- 101 989 986
- CN-A- 104 320 681

## Description

### TECHNICAL FIELD

The present disclosure relates to the field of communications technologies, and in particular, to a scheduling method for a content delivery network, and a device.

### BACKGROUND

A video service operator often provides a user with a service such as video on demand or live broadcast by using CDN nodes of a plurality of CDN (Content Delivery Network, content delivery network) service providers. For a user play request, a CDN scheduling system distributes the play request to a CDN network of the video service operator or a CDN node of a CDN service provider. During scheduling, an existing CDN scheduling system usually distributes a user request to a most appropriate edge CDN node based on a user location, or distributes user requests to CDN nodes of different CDN service vendors in proportion based on a pre-configured business rule. However, this scheduling manner is relatively monotonous, and service quality of a selected CDN node is not ensured, affecting user experience.

EP3017585 relates to bandwidth policy management in a self-corrected content delivery network. WO 01/89172 relates to meta content delivery network system.

### SUMMARY

Various aspects of the present disclosure have been defined in the independent claims. Further technical features of each of these aspects have been defined in the respective dependent claims.

The scheduling method for a content delivery network and the device provided in the aspects of the present information provide a solution in which the scheduling system selects, based on the CDN service SLA information, the target CDN service provider that meets the quality requirement, where there may be a plurality of cases for the CDN service SLA information. Therefore, scheduling flexibility of a content delivery network is improved, and service quality is ensured.

### BRIEF DESCRIPTION OF DRAWINGS

FIG. 1 is a schematic structural diagram of a part of a content delivery network according to an aspect of the present disclosure;
FIG. 2 is a schematic interaction diagram of a scheduling method for a content delivery network according to an aspect of the present disclosure;
FIG. 3 is a schematic flowchart of a scheduling method for a content delivery network according to an aspect of the present disclosure;
FIG. 4 is a schematic interaction diagram of CDN service quality monitoring according to an aspect of the present disclosure; and
FIG. 5 is a schematic structural diagram of a video client or a server according to an aspect of the present disclosure.

### DESCRIPTION OF ASPECTS

The following describes the technical solutions in the aspects of the present disclosure with reference to the accompanying drawings in the aspects of the present disclosure. Apparently, the described aspects are merely some not all of the aspects of the present disclosure. All other aspects obtained by a person of ordinary skill in the art based on the aspects of the present disclosure without creative efforts shall fall within the protection scope of the present disclosure.

The terms used in the aspects of the present disclosure are merely for the purpose of illustrating specific aspects, and are not intended to limit the present disclosure. The terms "a", "the" and "this" of singular forms used in the aspects and the appended claims of the present disclosure are also intended to include plural forms, unless otherwise specified in the context clearly. It should also be understood that, the term "and/or" used herein indicates and includes any or all possible combinations of one or more associated listed items. In addition, the character "/" in this specification generally indicates an "or" relationship between the associated objects.

It should be understood that, although the terms "first", "second", and "third" may be used to describe various messages, requests, and terminals in the aspects of the present disclosure, these messages, requests, and terminals are not to be limited to these terms. These terms are only used to distinguish the messages, requests, and terminals from each other. For example, without departing from the scope of the aspect of the present disclosure, a first terminal may alternatively be referred to as a second terminal, and similarly, a second terminal may alternatively be referred to as a first terminal.

Depending on the context, for example, the word "if' used herein may be explained as "while" or "when" or "in response to determining" or "in response to detection". Similarly, depending on the context, the phrase "if determining" or "if detecting (a stated condition or event)" may be explained as "when determining" or "in response to determining" or "when detecting (a stated condition or event)" or "in response to detecting (a stated condition or event)".

A preset time period, a statistical period, a preset class, a preset range, the preset class, and the like in the aspects of the present disclosure may be selected depending on an actual situation.

In the aspects of the present disclosure, a CDN service provider is a service provider that provides CDN nodes, for example, Tencent. A plurality of nodes of the CDN service provider may provide services for one or more video service operators.

In the aspects of the present disclosure, CDN service SLA (Service-Level Agreement, Service-Level Agreement) information includes at least one of the following: a total quantity of user serving times, a play success rate, a play failure rate, a total quantity of user service stalling times, a user service stalling rate (referred to as a stalling rate below), a user download fulfillment rate, an origin retrieval rate, a service reliability parameter, a play start delay compliance rate (a rate that a play start delay is within a required time), a download speed, and other information that can be used to estimate service quality. The quantity of times in the foregoing information may be a total quantity, an average value, or the like in a statistical period (which may be configured depending on a situation, for example, one day). This is not limited in the aspects of the present disclosure. Optionally, the CDN service SLA information includes a user service stalling rate, an origin retrieval rate, and a play success rate. In another optional implementation, besides a user service stalling rate, an origin retrieval rate, and a play success rate, the CDN service SLA information further includes at least one of a total quantity of user serving times, a user download fulfillment rate, service reliability, and a total quantity of user service stalling times that are in a statistical time period. The user service stalling rate, the origin retrieval rate, and the play success rate have higher weights than those of other information. Optionally, information reported by a video client includes a download speed, a current network speed, a video bit rate, play failure information, stalling information, a play start delay, and the like. SLA information, reported by a CDN content media server and a scheduling execution subsystem, about access of a CDN node of a CDN service provider to a system includes an origin retrieval rate and the like. The CDN service provider may provide SLA service log information, such as a user download fulfillment rate and a service reliability parameter. Service quality of CDN service providers may be estimated by collecting statistics on CDN service SLA information of the CDN service providers in a statistical period (which may be configured depending on an actual situation). The scheduling system may select a CDN service provider of ensured service quality directly or indirectly based on the CDN service SLA information.

A scheduling rule in the aspects of the present disclosure may define CDN service SLA information on which scheduling is based or CDN service SLA information on which scheduling proportion adjustment is based. The scheduling rule may be implemented in a plurality of manners. For example, the scheduling rule may be implemented based on (1) CDN service SLA quality parameters reported by video clients, for example, a parameter such as a play success rate, a user service stalling rate, or a play start delay compliance rate set for a statistical period, or (2) SLA indicators about access of CDN nodes of CDN service providers to a scheduling system, for example, an origin retrieval rate; or (3) SLA service log information of CDN service providers, for example, a user download fulfillment rate and a service reliability parameter.

In the aspects of the present disclosure, scheduling proportions are proportions by which CDN service providers are scheduled, and a sum of scheduling proportions of CDN service providers that provide services for a same video service operator is 100%. For example, a total of three CDN service providers A, B, and C provide services for a video service operator, and scheduling proportions of the three CDN service providers are 30%, 40%, and 30% respectively. For a total of N play requests, a scheduling system distributes N^{∗}30% play requests to the CDN service provider A for service provision, distributes N^{∗}40% play requests to the CDN service provider B for service provision, and distributes N^{∗}30% play requests to the CDN service provider C for service provision. Further, based on the foregoing scheduling proportions, the CDN service providers may be categorized into several classes. For example, a scheduling proportion corresponding to a class 1 is 50% to 80%, a scheduling proportion corresponding to a class 2 is 30% to 50%, and a scheduling proportion corresponding to a class 3 is 10% to 30%. Initial classes and initial scheduling proportions may be set based on CDN service SLA information of the CDN service providers in a period. For example, a CDN service provider of higher quality has a class higher than that of a CDN service provider of lower quality. It should be noted that, different service prices may be determined for CDN service providers of different classes, to incent the CDN service providers to improve node service quality.

In the aspects of the present disclosure, the scheduling proportions of the CDN service providers may be dynamically adjusted based on a parameter determined by using a scheduling rule. For example, the CDN service SLA information determined based on the scheduling rule is a stalling rate, and a scheduling proportion of a CDN service provider whose zero-stalling rate is lower than 95% in five consecutive days may be reduced by 10%. In an implementation, the parameter determined based on the scheduling rule is a stalling rate and an origin retrieval rate, and a scheduling proportion of a CDN service provider whose zero-stalling rate is lower than 95% or whose origin retrieval rate is higher than 15%, in one statistical period or a plurality of consecutive statistical periods, may be reduced by 10%. In another implementation, the CDN service SLA information determined based on the scheduling rule is a stalling rate, an origin retrieval rate, and a success rate, and a scheduling proportion of a CDN service provider whose zero-stalling rate is lower than 95%, or whose play success rate is lower than 98%, or whose origin retrieval rate is higher than 15%, in one statistical period or a plurality of consecutive statistical periods, may be reduced by 10%. It may be understood that, a person skilled in the art may also obtain other implementations based on the foregoing examples.

A scheduling system provided in the aspects of the present disclosure selects, from a plurality of CDN service providers that provide services for a video service operator, a target CDN service provider that meets a CDN service quality requirement, so that a node of the selected CDN service provider provides a service for a user. Optionally, the scheduling system may select, based on numeric values of CDN service SLA information of the plurality of CDN service providers, a CDN service provider whose numeric value is within a first preset range (setting of the first preset range reflects the CDN service quality requirement) as the target CDN service provider. Optionally, the scheduling system may obtain scheduling proportions of the CDN service providers based on the CDN service SLA information of the plurality of CDN service providers and a scheduling rule, and then determine, based on the scheduling proportions, a CDN service provider to which a play request/play scheduling request in a period of time should be distributed. Optionally, the scheduling system may obtain scheduling proportions of the CDN service providers based on the CDN service SLA information of the plurality of CDN service providers and a scheduling rule, and then selects a CDN service provider whose scheduling proportion is within a second preset range as the target CDN service provider. Optionally, the scheduling system may obtain scheduling proportions of the CDN service providers based on the CDN service SLA information of the plurality of CDN service providers and a scheduling rule, and then obtain classes and select a CDN service provider of a preset class as the target CDN service provider. It can be learned that the scheduling system selects the target CDN service provider directly or indirectly based on the CDN service SLA information of the plurality of CDN service providers that can be used to estimate service quality of the CDN service providers.

The scheduling system may be responsible for only selecting a CDN service provider, and a specific CDN node that provides a service may be selected by the selected CDN service provider based on a policy of the CDN service provider, from nodes that provide services for the video service operator. This is not limited in the aspects of the present disclosure.

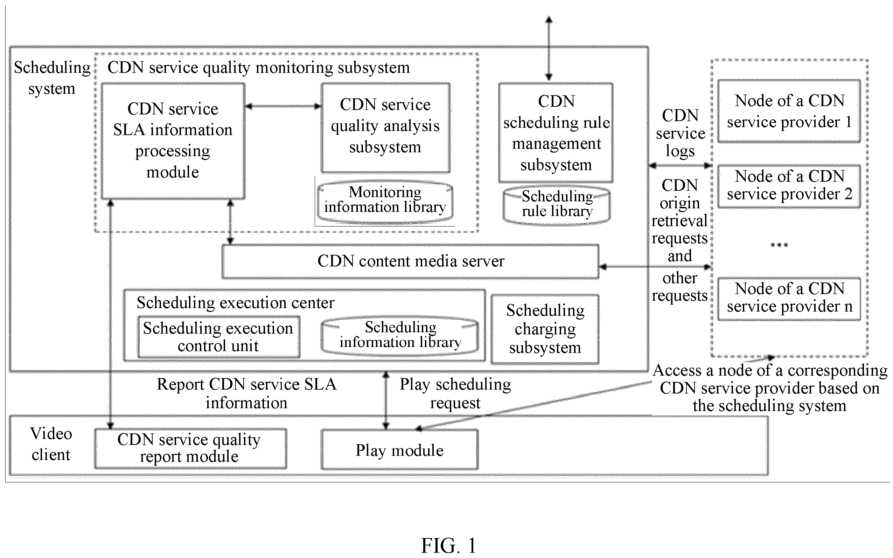

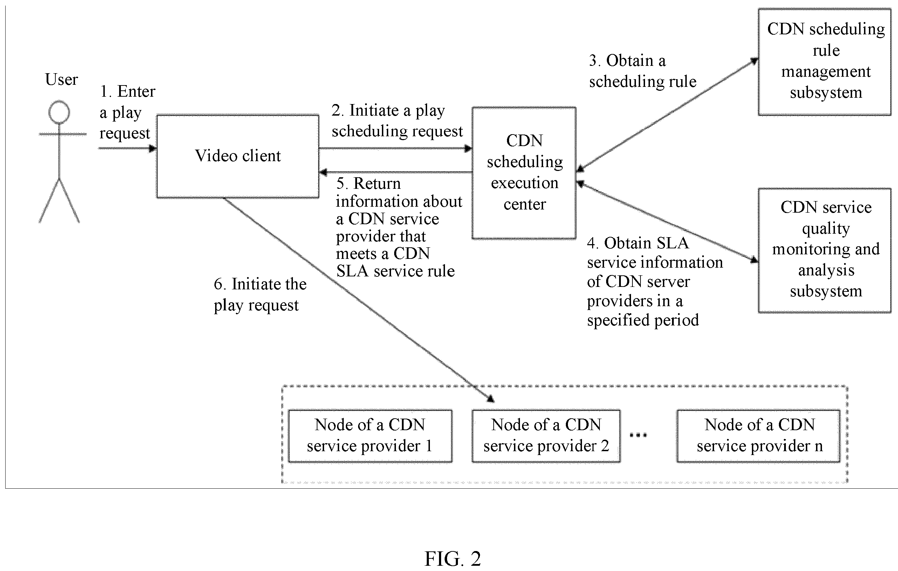

FIG. 1 is a schematic structural diagram of a part of a content delivery network according to an aspect of the present disclosure. FIG. 1 shows a scheduling system responsible for scheduling, nodes of CDN service providers, and a video client that can be operated by a user. FIG. 2 is a schematic interaction diagram of a scheduling method for a content delivery network according to an aspect of the present disclosure. A CDN content media server stores media content such as videos. When a video that a user desires to play is not cached in a node of a CDN service provider, the node of the CDN service provider needs to send an origin retrieval request to the CDN content media server to obtain the video.

The video client may be a device that provides a video service for the user, for example, a mobile phone, a tablet computer, or a palm computer. The user enters a play request by using an input interface of the video client, and a play module processes the play request, for example, sending a play scheduling request to the scheduling system. A scheduling execution center included in the scheduling system receives the play scheduling request, obtains scheduling proportions based on CDN service SLA information of the CDN service vendors that is provided by CDN service quality monitoring subsystems and a scheduling rule set by an administrator, and distributes the play request of the client to a corresponding CDN node of a target CDN service vendor, that is, returning, to the video client, information about a CDN service provider that meets a criterion. The scheduling execution center may also send, to a CDN scheduling charging subsystem, information about the current scheduling to the corresponding CDN service vendor, and the CDN scheduling charging subsystem performs charging and settlement based on the scheduling result information. The video client sends the play request to a node of the corresponding CDN service provider based on the information returned by the scheduling execution center.

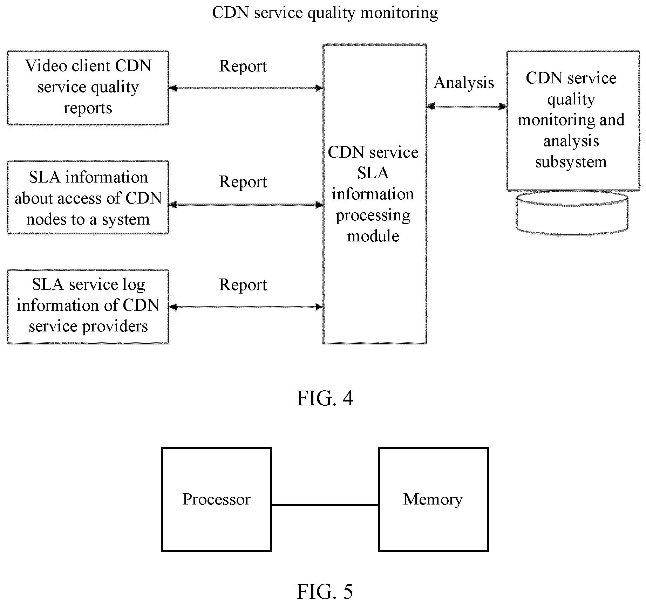

The CDN service quality monitoring subsystem is shown in FIG. 4, and may include a video client CDN service quality report sub-module, and a CDN service quality monitoring and analysis subsystem. Only a part, of the scheduling system, that belongs to the CDN service quality monitoring subsystem is shown in a dashed box in FIG. 1. The CDN service SLA information of the CDN service providers may be sent by the video client CDN service quality report module, or may be obtained from SLA information, reported by the CDN content media server and the scheduling execution subsystem, about access of CDN nodes of the CDN service providers to the system, and/or SLA service log information of the CDN service providers. It may be understood that, the SLA service log information is only SLA service log information of nodes that are scheduled by the scheduling system of the video service operator, that is, nodes that provide services for the video service operator.

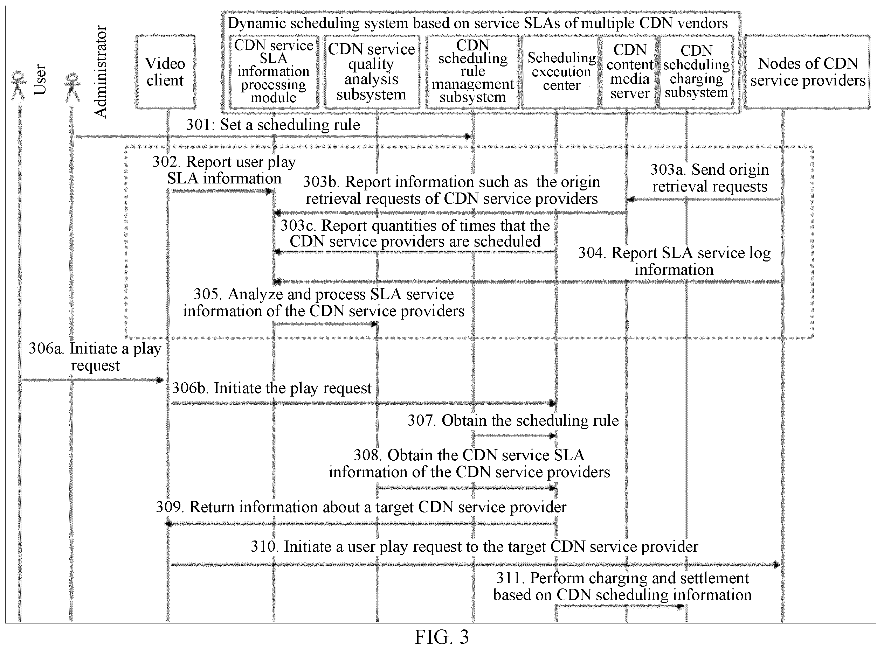

FIG. 3 is a schematic flowchart of a scheduling method for a content delivery network according to an aspect of the present disclosure. Description is provided with reference to FIG. 1 and FIG. 3.

301. An administrator sets a scheduling rule by using a CDN scheduling rule management subsystem, where the scheduling rule is stored in a scheduling rule library. The setting may be flexibly designed based on CDN service SLA quality, as described in the foregoing examples. Details are not repeated herein.

302. Video client CDN service quality report modules report CDN service SLA information of CDN service providers to a CDN service SLA information processing module of a scheduling system.

303a. Nodes of the CDN service providers send origin retrieval requests to a CDN content media server, to obtain videos that are not cached on the nodes and that users desire to play.

303b. The CDN content media server collects statistics on information such as quantities of origin retrieval requests initiated by the nodes of the CDN service providers to the CDN content media server or origin retrieval rates of the nodes of the CDN service providers, and reports the information to the CDN service SLA information processing module.

303c: A scheduling execution subsystem reports, to the CDN service SLA information processing module, quantities of times that the CDN service providers are scheduled in a preset time period, where the preset time period may be set depending on time-related information.

304. The nodes of the CDN service providers report, to the CDN service SLA information processing module, service log information (including information such as user download speeds and video play bit rates of the nodes) in a preset time period, where the preset time period may be the same as or different from the preset time period in 303.

305. A CDN service quality analysis subsystem analyzes and processes the SLA information received by the CDN service SLA information processing module, to obtain CDN service SLA information (the CDN service SLA information herein is that in the foregoing examples, and details are not repeated herein) of the CDN service vendors in a statistical period.

306. A user enters a play request to a video client, and a play module of the video client initiates a play scheduling request to the scheduling execution center, where the play scheduling request is used to request the scheduling execution center to return information about a target CDN service provider.

307. The scheduling execution center obtains the scheduling rule set by the administrator from the scheduling rule library.

308. The scheduling execution center obtains the CDN service SLA information of the CDN service providers that is provided by a CDN service quality monitoring subsystem, adjusts scheduling proportions of the CDN service vendors based on the CDN service SLA information of the CDN service vendors and the scheduling rule, and then determines the target CDN service provider based on the scheduling proportions. For example, a CDN service provider whose scheduling proportion is greater than a threshold (which may be selected depending on an actual situation) in a current statistical period or a latest complete statistical period is determined as the target CDN service provider, or a CDN service provider whose scheduling proportion is less than a threshold (which may be selected depending on an actual situation) in a current statistical period or a latest complete statistical period is determined as the target CDN service provider, or the target CDN service provider is proportionally determined based on a quantity of play requests or play scheduling requests and/or scheduled play requests in a preset time period, and the scheduling proportions. Alternatively, after the scheduling proportions are determined, classes of the CDN service providers are set, and a CDN service provider of a preset class is determined as the target CDN service provider.

It may be understood that, if step 307 is omitted, the target CDN service provider may be selected by considering only the CDN service SLA information of the CDN service vendors. For example, a CDN service provider whose CDN service SLA information has a specific numeric value that is within a range (for example, whose zero-stalling rate is higher than 95%, or whose play success rate is lower than 98%, or whose origin retrieval rate is lower than 15%) in a current statistical period or a latest complete statistical period is determined as the target CDN service provider.

309. The scheduling execution center returns a message to the video client, where the message carries the information about the target CDN service provider, for example, an address of a CDN node of the target CDN service provider, or other information that can be used by the video client to find the node.

310. The video client initiates the play request to the CDN node of the target CDN service provider based on the information returned by the scheduling execution center.

The CDN node provides a corresponding video service based on the play request. For an implementation process, refer to related content in the prior art.

311. The scheduling execution center sends, to a CDN scheduling charging subsystem, information about the current scheduling to the corresponding CDN service vendor, and the CDN scheduling charging system performs charging and settlement based on the real-time scheduling result information.

It may be understood that, the foregoing method flowchart is merely an example, and some steps may be performed in other orders as required. For example, the reporting in 303c, 303d, and 404 may be performed simultaneously or in an order, and a specific order thereof does not constitute a limitation on the present disclosure.

FIG. 5 is a schematic structural diagram of a video client or a server according to an aspect of the present disclosure.

The video client includes a memory, a processor, and a computer program that is stored in the memory and that is capable of running on the processor. The processor executes the computer program to instruct the video client to complete the steps executed by the video client in the foregoing method aspect.

The foregoing scheduling system may include one or more servers, and each server includes a memory, a processor, and a computer program that is stored in the memory and that is capable of running on the processor. The processor executes the computer program to instruct the server to complete corresponding steps.

For example, all systems and centers of the scheduling system may be implemented on one server, and a processor of the server executes the computer program to instruct the server to complete the steps executed by the foregoing scheduling system.

Alternatively, one or more of a scheduling execution center, a CDN service quality monitoring subsystem, a CDN content media server, a CDN scheduling rule management subsystem, and a scheduling charging subsystem of the scheduling system may be implemented on one server, and a processor of the server executes the computer program to instruct the server to complete the steps executed by the foregoing subsystems and/or centers.

A person of ordinary skill in the art may be aware that, the units and algorithm steps in the examples described with reference to the aspects disclosed in this specification can be implemented by electronic hardware or a combination of computer software and electronic hardware. Whether the functions are performed by hardware or software depends on particular applications and design constraint conditions of the technical solutions. A person skilled in the art may use a different method to implement the described functions for each particular application, but it should not be considered that the implementation goes beyond the scope of the present disclosure.

It may be clearly understood by a person skilled in the art that, for the purpose of convenient and brief description, for a detailed working process of the foregoing system, apparatus, and unit, reference may be made to a corresponding process in the foregoing method aspect. Details are not repeated herein.

In the several aspects provided in this application, it should be understood that the disclosed system, apparatus, and method may be implemented in other manners. For example, the described apparatus aspect is merely an example. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be indirect couplings or communication connections via some interfaces, apparatuses, or units, and may be implemented in electrical, mechanical, or other forms.

The units described as separate parts may or may not be physically separate. Parts displayed as units may or may not be physical units, and may be located in one position or distributed on a plurality of network units. Some or all of the units may be selected depending on actual requirements to achieve the objectives of the solutions of the aspects.

In addition, functional units in the aspects of the present disclosure may be integrated into one processing unit, or each of the units may exist alone physically, or two or more units may be integrated into one unit.

When the functions are implemented in the form of a software functional unit and sold or used as an independent product, the functions may be stored in a computer-readable storage medium. Based on such an understanding, the technical solutions of the present disclosure essentially, or the part contributing to the prior art, or some of the technical solutions may be implemented in a form of a software product. The computer software product is stored in a storage medium and includes several instructions for instructing a computer device (which may be a personal computer, a center server, a network device, or the like) or a processor (processor) to perform all or some of the steps of the methods described in the aspects of the present disclosure. The foregoing storage medium includes any medium that can store program code, for example, a USB flash drive, a removable hard disk, a read-only memory (ROM, Read-Only Memory), a random access memory (RAM, Random Access Memory), a magnetic disk, or an optical disc.

The foregoing descriptions are merely specific implementations of the present disclosure, but are not intended to limit the protection scope of the present disclosure. Any variation or replacement readily figured out by a person skilled in the art within the technical scope disclosed in the present disclosure shall fall within the protection scope of the present disclosure. Therefore, the protection scope of the present disclosure shall be subject to the protection scope of the claims.

## Claims

1. A scheduling method for a content delivery network, comprising:
receiving (306), by a scheduling system, a play scheduling request sent by a video client;
determining (307, 308), in response to the play scheduling request and based on at least CDN service SLA information of a plurality of CDN service providers, a target CDN service provider that meets a quality requirement; and
returning (309) information about a CDN node of the target CDN service provider to the video client, so that the video client sends a play request to the CDN node of the target CDN service provider, wherein
the CDN service SLA information comprises at least one of the following: a total quantity of user serving times, a play success rate, a play failure rate, a total quantity of user service stalling times, a user service stalling rate, an origin retrieval rate, a user download fulfillment rate, a service reliability parameter, a play start delay compliance rate, and a download speed;
wherein the method further comprises: storing, by the scheduling system, a scheduling rule, wherein the scheduling rule is configured by an administrator; and
the scheduling rule comprises:
adjusting scheduling proportions of the plurality of CDN service providers based on CDN service SLA quality parameters reported by a plurality of video clients, wherein the CDN service SLA quality parameters reported by the plurality of video clients comprise the following: a play success rate, a user service stalling rate, and a play start delay that are in a statistical period.

2. The method according to claim 1, wherein the adjusting scheduling proportions of the plurality of CDN service providers based on CDN service SLA quality parameters reported by a plurality of video clients comprises:
decreasing, by 10%, a scheduling proportion of a CDN service provider whose zero-stalling rate is lower than 95% in a preset time period; or
decreasing, by 10%, a scheduling proportion of a CDN service provider whose play success rate is lower than 98% in a preset time period.

3. The method according to claim 1, wherein the adjusting scheduling proportions of the plurality of CDN service providers based on SLA indicators about access of CDN nodes of the plurality of CDN service providers to the scheduling system comprises:
decreasing, by 10%, a scheduling proportion of a CDN service provider whose origin retrieval rate is higher than 15% in one statistical period or a plurality of consecutive statistical periods.

4. The method according to claim 1, wherein the determining, based on at least CDN service SLA information of a plurality of CDN service providers, a target CDN service provider that meets a quality requirement comprises:
determining, as the target CDN service provider, a CDN service provider whose numeric value of CDN service SLA information falls within a preset range in a current statistical period or a latest complete statistical period.

5. The method according to claim 1 or 2, wherein the determining, based on at least CDN service SLA information of a plurality of CDN service providers, a target CDN service provider that meets a quality requirement comprises:
determining, as the target CDN service provider, a CDN service provider whose scheduling proportion in a current statistical period or a latest complete statistical period falls within a preset range; or
proportionally determining the target CDN service provider based on a quantity of play requests or play scheduling requests in a current statistical period and the scheduling proportions of the plurality of CDN service providers.

6. The method according to claim 1 or 2, wherein the method further comprises:
categorizing the plurality of CDN service providers into at least two classes based on the scheduling proportions of the plurality of CDN service providers; and
the determining, based on at least CDN service SLA information of a plurality of CDN service providers, a target CDN service provider that meets a quality requirement comprises:
determining a CDN service provider of a preset class as the target CDN service provider.

7. The method according to any one of claims 1 to 3 and claim 5, wherein the method further comprises:
receiving the CDN service SLA quality parameters reported by the plurality of video clients;
receiving origin retrieval requests sent by the CDN nodes of the plurality of CDN service providers, and collecting statistics on origin retrieval rates of the plurality of CDN service providers based on the origin retrieval requests; or
receiving SLA service log information reported by the CDN nodes of the plurality of CDN service providers.

8. A scheduling system, comprising:
a scheduling execution center, configured to receive a play scheduling request sent by a video client; and
a CDN service quality monitoring subsystem, configured to obtain CDN service SLA information of a plurality of CDN service providers, wherein
the scheduling execution center is configured to: determine, based on at least the CDN service SLA information of the plurality of CDN service providers, a target CDN service provider that meets a quality requirement; and return information about a CDN node of the target CDN service provider to the video client, so that the video client sends a play request to the CDN node of the target CDN service provider;
wherein the scheduling system further comprises:
a CDN scheduling rule management subsystem, configured to receive a configuration operation performed by an administrator on a scheduling rule; and
a scheduling rule library, configured to store the scheduling rule, wherein
the scheduling rule comprises:
adjusting scheduling proportions of the plurality of CDN service providers based on CDN service SLA quality parameters reported by a plurality of video clients, wherein the CDN service SLA quality parameters reported by the plurality of video clients comprise at least one of the following: a play success rate, a user service stalling rate, and a play start delay compliance rate that are in a statistical period.

9. The scheduling system according to claim8, wherein the scheduling system further comprises:
a CDN content media server, configured to: receive origin retrieval requests sent by the CDN nodes of the plurality of CDN service providers, and return media content corresponding to the origin retrieval requests.

10. A scheduling system, comprising a memory, a processor, and a computer program that is stored in the memory and that is capable of running on the processor, wherein the processor executes the computer program to instruct the scheduling system to implement the method according to any one of claims 1 to 7.

## Patentansprüche

1. Scheduling-Verfahren für ein Inhaltsbereitstellungsnetz, umfassend:
Empfangen (306), durch ein Scheduling-System, einer durch einen Video-Client gesendeten Wiedergabe-Scheduling-Anfrage;
Bestimmen (307, 308), als Reaktion auf die Wiedergabe-Scheduling-Anfrage und basierend auf mindestens SLA-Informationen eines CDN-Dienstes einer Vielzahl von CDN-Dienstleistern, eines Ziel-CDN-Dienstleisters, der eine Qualitätsanforderung erfüllt; und
Zurücksenden (309) von Informationen über einen CDN-Knoten des Ziel-CDN-Dienstleisters an den Video-Client, sodass der Video-Client eine Wiedergabeanfrage an den CDN-Knoten des Ziel-CDN-Dienstleisters sendet, wobei
die SLA-Informationen des CDN-Dienstes mindestens eines von Folgendem umfassen: einer Gesamtmenge der Male von Benutzerbedienungen, einer Rate für erfolgreiche Wiedergaben, einer Rate für fehlgeschlagene Wiedergaben, einer Gesamtmenge der Male von Benutzerdienstabbrüchen, einer Rate für Benutzerdienstabbrüche, einer Ursprungsabfragerate, einer Rate für die Vollendung von Benutzerdownloads, einem Dienstzuverlässigkeitsparameter, einer Rate für die Einhaltung einer Wiedergabestartverzögerung und einer Downloadgeschwindigkeit;
wobei das Verfahren ferner Folgendes umfasst: Speichern einer Scheduling-Regel durch das Scheduling-System, wobei die Scheduling-Regel durch einen Administrator konfiguriert ist; und
wobei die Scheduling-Regel Folgendes umfasst:
Einstellen von Scheduling-Anteilen der Vielzahl von CDN-Dienstleistern basierend auf durch eine Vielzahl von Video-Clients gemeldeten SLA-Qualitätsparametern des CDN-Dienstes, wobei die durch die Vielzahl von Video-Clients gemeldeten SLA-Qualitätsparameter des CDN-Dienstes das Folgende umfassen: eine Rate für erfolgreiche Wiedergaben, eine Rate für Benutzerdienstabbrüche und eine Wiedergabestartverzögerung, die in einem statistischen Zeitraum auftreten.

2. Verfahren nach Anspruch 1, wobei das Einstellen von Scheduling-Anteilen der Vielzahl von CDN-Dienstleistern basierend auf durch eine Vielzahl von Video-Clients gemeldeten SLA-Qualitätsparametern des CDN-Dienstes Folgendes umfasst:
Verringern, um 10 %, eines Scheduling-Anteils eines CDN-Dienstleisters, dessen Null-Abbruchsrate in einem vorher festgelegten Zeitraum unter 95 % liegt; oder
Verringern, um 10 %, eines Scheduling-Anteils eines CDN-Dienstleisters, dessen Rate für erfolgreiche Wiedergaben in einem vorher festgelegten Zeitraum unter 98 % liegt.

3. Verfahren nach Anspruch 1, wobei das Einstellen von Scheduling-Anteilen der Vielzahl von CDN-Dienstleistern basierend auf SLA-Indikatoren zum Zugriff von CDN-Knoten der Vielzahl von CDN-Dienstleister auf das Scheduling-System Folgendes umfasst:
Verringern, um 10 %, eines Scheduling-Anteils eines CDN-Dienstleisters, dessen Ursprungsabfragerate in einem statistischen Zeitraum oder einer Vielzahl von aufeinanderfolgenden statistischen Zeiträumen über 15 % liegt.

4. Verfahren nach Anspruch 1, wobei das Bestimmen, basierend auf mindestens SLA-Informationen des CDN-Dienstes einer Vielzahl von CDN-Dienstleistern, eines Ziel-CDN-Dienstleisters, der eine Qualitätsanforderung erfüllt, Folgendes umfasst:
Bestimmen eines CDN-Dienstleisters, dessen nummerischer Wert von SLA-Informationen des CDN-Dienstes in einem aktuellen statistischen Zeitraum oder einem zuletzt abgeschlossenen statistischen Zeitraum in einen vorher festgelegten Bereich fällt, als den Ziel-CDN-Dienstleister.

5. Verfahren nach Anspruch 1 oder 2, wobei das Bestimmen, basierend auf mindestens SLA-Informationen des CDN-Dienstes einer Vielzahl von CDN-Dienstleistern, eines Ziel-CDN-Dienstleisters, der eine Qualitätsanforderung erfüllt, Folgendes umfasst:
Bestimmen eines CDN-Dienstleisters, dessen Scheduling-Anteil in einem aktuellen statistischen Zeitraum oder einem zuletzt abgeschlossenen statistischen Zeitraum in einen vorher festgelegten Bereich fällt, als den Ziel-CDN-Dienstleister; oder
proportionales Bestimmen des Ziel-CDN-Dienstleisters basierend auf einer Menge von Wiedergabeanfragen oder Wiedergabe-Scheduling-Anfragen in einem aktuellen statistischen Zeitraum und den Scheduling-Anteilen der Vielzahl von CDN-Dienstleistern.

6. Verfahren nach Anspruch 1 oder 2, wobei das Verfahren ferner Folgendes umfasst:
Kategorisieren der Vielzahl von CDN-Dienstleistern in mindestens zwei Klassen basierend auf den Scheduling-Anteilen der Vielzahl von CDN-Dienstleistern; und
wobei das Bestimmen, basierend auf mindestens SLA-Informationen des CDN-Dienstes einer Vielzahl von CDN-Dienstleistern, eines Ziel-CDN-Dienstleisters, der eine Qualitätsanforderung erfüllt, Folgendes umfasst:
Bestimmen eines CDN-Dienstleisters einer vorher eingestellten Klasse als den Ziel-CDN-Dienstleister.

7. Verfahren nach einem der Ansprüche 1 bis 3 und Anspruch 5, wobei das Verfahren ferner Folgendes umfasst:
Empfangen der durch die Vielzahl von Video-Clients gemeldeten SLA-Qualitätsparameter des CDN-Dienstes;
Empfangen von durch die CDN-Knoten der Vielzahl von CDN-Dienstleistern gesendeten Ursprungsabfrageanfragen und Sammeln von Statistiken über Ursprungsabfrageraten der Vielzahl von CDN-Dienstleistern basierend auf den Ursprungsabfrageanfragen; oder
Empfangen von durch die CDN-Knoten der Vielzahl von CDN-Dienstleistern gesendeten SLA-Dienstprotokollinformationen.

8. Scheduling-System, umfassend:
ein Scheduling-Ausführungszentrum, das dazu konfiguriert ist, eine durch einen Video-Client gesendete Wiedergabe-Scheduling-Anfrage zu empfangen; und
ein Teilsystem zur Überwachung der CDN-Dienstqualität, das dazu konfiguriert ist, SLA-Informationen des CDN-Dienstes einer Vielzahl von CDN-Dienstleistern zu erlangen, wobei
das Scheduling-Ausführungszentrum zu Folgendem konfiguriert ist: Bestimmen, basierend auf mindestens den SLA-Informationen des CDN-Dienstes der Vielzahl von CDN-Dienstleistern, eines Ziel-CDN-Dienstleisters, der eine Qualitätsanforderung erfüllt; und Zurücksenden von Informationen über einen CDN-Knoten des Ziel-CDN-Dienstes an den Video-Client, sodass der Video-Client eine Wiedergabeanfrage an den CDN-Knoten des Ziel-CDN-Dienstleisters sendet;
wobei das Scheduling-System ferner Folgendes umfasst:
ein Teilsystem zur Verwaltung der CDN-Scheduling-Regeln, das dazu konfiguriert ist, einen Konfigurationsvorgang zu empfangen, der durch einen Administrator an einer Scheduling-Regel durchgeführt wird; und
eine Scheduling-Regelbibliothek, die dazu konfiguriert ist, die Scheduling-Regel zu speichern, wobei
die Scheduling-Regel Folgendes umfasst:
Einstellen von Scheduling-Anteilen der Vielzahl von CDN-Dienstleistern basierend auf durch eine Vielzahl von Video-Clients gemeldeten SLA-Qualitätsparametern des CDN-Dienstes, wobei die durch die Vielzahl von Video-Clients gemeldeten SLA-Qualitätsparameter des CDN-Dienstes mindestens eines von Folgendem umfassen: einer Rate für erfolgreiche Wiedergaben, einer Rate für Benutzerdienstabbrüche und einer Rate für die Einhaltung einer Wiedergabestartverzögerung, die in einem statistischen Zeitraum auftreten.

9. Scheduling-System nach Anspruch 8, wobei das Scheduling-System ferner Folgendes umfasst:
einen CDN-Inhaltsmedienserver, der zu Folgendem konfiguriert ist: Empfangen von durch die CDN-Knoten der Vielzahl von CDN-Dienstleistern gesendeten Ursprungsabfrageanfragen und Zurücksenden von Medieninhalt, der den Ursprungsabfrageanfragen entspricht.

10. Scheduling-System, umfassend einen Speicher, einen Prozessor und ein Computerprogramm, das in dem Speicher gespeichert ist und das auf dem Prozessor ausgeführt werden kann, wobei der Prozessor das Computerprogramm ausführt, um das Scheduling-System dazu anzuweisen, das Verfahren nach einem der Ansprüche 1 bis 7 umzusetzen.

## Revendications

1. Procédé d'ordonnancement pour un réseau de distribution de contenu, comprenant :
la réception (306), par un système d'ordonnancement, d'une demande d'ordonnancement de lecture envoyée par un client vidéo ;
la détermination (307, 308), en réponse à la demande d'ordonnancement de lecture et sur la base au moins d'informations SLA de service CDN d'une pluralité de fournisseurs de service CDN, un fournisseur de service CDN cible qui répond à une exigence de qualité ; et
le renvoi (309) d'informations concernant un nœud CDN du fournisseur de service CDN cible au client vidéo, de sorte que le client vidéo envoie une demande de lecture au nœud CDN du fournisseur de service CDN cible, dans lequel
les informations SLA de service CDN comprennent au moins l'un des suivants : une quantité totale d'occurrences de service d'utilisateur, un taux de réussite de lecture, un taux d'échec de lecture, une quantité totale d'occurrences de retardement de service d'utilisateur, un taux de récupération d'origine, un taux d'accomplissement de téléchargement d'utilisateur, un paramètre de fiabilité de service, un taux de conformité de retard de démarrage de lecture, et une vitesse de téléchargement ;
dans lequel le procédé comprend en outre : le stockage, par le système d'ordonnancement, d'une règle d'ordonnancement, dans lequel la règle d'ordonnancement est conçue par un administrateur ; et
la règle d'ordonnancement comprend :
l'ajustement de proportions d'ordonnancement de la pluralité de fournisseurs de service CDN sur la base de paramètres de qualité SLA de service CDN signalés par une pluralité de clients vidéo, dans lequel les paramètres de qualité SLA de service CDN signalés par la pluralité de clients vidéo comprennent les suivants : un taux de réussite de lecture, un taux de retardement de service d'utilisateur, et un retard de démarrage de lecture qui sont dans une période statistique.

2. Procédé selon la revendication 1, dans lequel l'ajustement de proportions d'ordonnancement de la pluralité de fournisseurs de service CDN sur la base de paramètres de qualité SLA de service CDN signalés par une pluralité de clients vidéo comprend :
l'abaissement, de 10 %, d'une proportion d'ordonnancement d'un fournisseur de service CDN dont le taux d'absence de retardement est inférieur à 95 % dans une période de temps prédéfinie ; ou
l'abaissement, de 10 %, d'une proportion d'ordonnancement d'un fournisseur de service CDN dont le taux de réussite de lecture est inférieur à 98 % dans une période de temps prédéfinie.

3. Procédé selon la revendication 1, dans lequel l'ajustement de proportions d'ordonnancement de la pluralité de fournisseurs de service CDN sur la base d'indicateurs SLA relatifs à un accès de nœuds CDN de la pluralité de fournisseurs de service CDN au système d'ordonnancement comprend :
l'abaissement, de 10 %, d'une proportion d'ordonnancement d'un fournisseur de service CDN dont le taux de récupération d'origine est supérieur à 15 % dans une période statistique ou une pluralité de périodes statistiques consécutives.

4. Procédé selon la revendication 1, dans lequel la détermination, sur la base au moins d'informations SLA de service CDN d'une pluralité de fournisseurs de service CDN, d'un fournisseur de service CDN cible qui répond à une exigence de qualité comprend :
la détermination, en tant que fournisseur de service CDN cible, d'un fournisseur de service CDN dont une valeur numérique d'informations SLA de service CDN tombe dans une plage prédéfinie dans une période statistique en cours ou une période statistique achevée la plus récente.

5. Procédé selon la revendication 1 ou 2, dans lequel la détermination, sur la base u moins d'informations SLA de service CDN d'une pluralité de fournisseurs de service CDN, d'un fournisseur de service CDN cible qui répond à une exigence de qualité comprend :
la détermination, en tant que fournisseur de service CDN cible, d'un fournisseur de service CDN dont une proportion d'ordonnancement dans une période statistique en cours ou une période statistique achevée la plus récente tombe dans une plage prédéfinie ; ou
la détermination proportionnellement du fournisseur de service CDN cible sur la base d'une quantité de demandes de lecture ou de demandes d'ordonnancement de lecture dans une période statistique en cours et des proportions d'ordonnancement de la pluralité de fournisseurs de service CDN.

6. Procédé selon la revendication 1 ou 2, le procédé comprenant en outre :
la catégorisation de la pluralité de fournisseurs de service CDN en au moins deux classes sur la base des proportions d'ordonnancement de la pluralité de fournisseurs de service CDN ; et
la détermination, sur la base au moins d'informations SLA de service CDN d'une pluralité de fournisseurs de service CDN, d'un fournisseur de service CDN cible qui répond à une exigence de qualité comprend :
la détermination d'un fournisseur de service CDN d'une classe prédéfinie en tant que fournisseur de service CDN cible.

7. Procédé selon l'une quelconque des revendications 1 à 3 et la revendication 5, le procédé comprenant en outre :
la réception des paramètres de qualité SLA de service CDN signalés par la pluralité de clients vidéo ;
la réception de demandes de récupération d'origine envoyées par les nœuds CDN de la pluralité de fournisseurs de service CDN, et la collecte de statistiques sur des taux de récupération d'origine de la pluralité de fournisseurs de service CDN sur la base des demandes de récupération d'origine ; ou
la réception d'informations de journal de service SLA signalées par les nœuds CDN de la pluralité de fournisseurs de service CDN.

8. Système d'ordonnancement, comprenant :
un centre d'exécution d'ordonnancement, conçu pour recevoir une demande d'ordonnancement de lecture envoyée par un client vidéo ; et
un sous-système de surveillance de qualité de service CDN, conçu pour obtenir des informations SLA de service CDN d'une pluralité de fournisseurs de service CDN, dans lequel
le centre d'exécution d'ordonnancement est conçu pour : déterminer, sur la base au moins des informations SLA de service CDN de la pluralité de fournisseurs de service CDN, un fournisseur de service CDN cible qui répond à une exigence de qualité ; et renvoyer des informations concernant un nœud CDN du fournisseur de service CDN cible au client vidéo, de sorte que le client vidéo envoie une demande de lecture au nœud CDN du fournisseur de service CDN cible ;
le système d'ordonnancement comprenant en outre :
un sous-système de gestion de règle d'ordonnancement CDN, conçu pour recevoir une opération de configuration réalisée par un administrateur sur une règle d'ordonnancement ; et
une bibliothèque de règles d'ordonnancement, conçue pour stocker la règle d'ordonnancement, dans lequel
la règle d'ordonnancement comprend :
l'ajustement de proportions d'ordonnancement de la pluralité de fournisseurs de service CDN sur la base de paramètres de qualité SLA de service CDN signalés par une pluralité de clients vidéo, dans lequel les paramètres de qualité SLA de service CDN signalés par la pluralité de clients vidéo comprennent au moins l'un des suivants : un taux de réussite de lecture, un taux de retardement de service d'utilisateur, et un taux de conformité de retard de démarrage de lecture qui sont dans une période statistique.

9. Système d'ordonnancement selon la revendication 8, le système d'ordonnancement comprenant en outre :
un serveur multimédia de contenu CDN, conçu pour : recevoir des demandes de récupération d'origine envoyées par les nœuds CDN de la pluralité de fournisseurs de service CDN, et renvoyer un contenu multimédia correspondant aux demandes de récupération d'origine.

10. Système d'ordonnancement, comprenant une mémoire, un processeur, et un programme d'ordinateur qui est stocké dans la mémoire et qui est capable de s'exécuter sur le processeur, dans lequel le processeur exécute le programme d'ordinateur pour donner l'instruction au système d'ordonnancement de mettre en œuvre le procédé selon l'une quelconque des revendications 1 à 7 .
